# EUROPÄISCHE PATENTSCHRIFT

(11) **EP 2 931 449 B1**
(45) Veröffentlichungstag und Bekanntmachung des Hinweises auf die Patenterteilung: **02.11.2016**
(21) Anmeldenummer: 13820724.6
(22) Anmeldetag: 12.12.2013
(51) Int. Cl.: B21C 37/08, B21D 53/14, B23K 37/053, F16G 5/16

(54) **VERFAHREN ZUR HERSTELLUNG EINES ENDLOSBANDES**
METHOD FOR PRODUCING AN ENDLESS BELT
PROCÉDÉ DE RÉALISATION D'UNE BANDE DE MATIÈRE CONTINUE

(30) Priorität: 12.12.2012 AT 505772012
(43) Veröffentlichungstag der Anmeldung: 21.10.2015
(73) Patentinhaber: Berndorf Band GmbH, 2560 Berndorf (AT)
(72) Erfinder: STÜCKLER, Thomas, A-2630 Ternitz (AT); SZIGETHI, Richard, A-7201 Neudörfl (AT)
(74) Vertreter: Burger, Hannes
(86) Internationale Anmeldenummer: PCT/AT2013/050247
(87) Internationale Veröffentlichungsnummer: WO 2014/089594

(56) Entgegenhaltungen:
- EP-A2- 1 632 307
- DE-C1- 4 432 674
- GB-A- 485 242
- US-A- 5 269 856

## Beschreibung

Die Erfindung betrifft ein Verfahren zur Herstellung eines Endlosbandes aus zumindest zwei plattenförmigen Metallblechen.
Als Endlosbänder ausgebildete Kleinbänder, beispielsweise Radantriebsbänder, wie sie bei Fahrzeugprüfständen verwendet werden, oder Kleinbänder wie sie in Vorrichtungen zur Herstellung von kaschierter Wellpappe zum Einsatz kommen können, werden üblicherweise durch Biegen und Verschweißen von Metallblechen hergestellt. Hierbei ergibt sich das Problem, dass das Rohmaterial oft in Form von Metalltafeln mit vom Hersteller der Metalltafeln vorgegebener Größe vorliegt, sodass es oftmals erforderlich ist, Metalltafeln miteinander zu verschweißen, um eine gewünschte Bandlänge zu erreichen. Bislang gibt es jedoch noch keine Lösung, die ein weitgehend automatisiertes Biegen und Schweißen der Metallbleche zu einem Endlosband erlaubt, sodass noch eine überwiegende Zahl der Herstellungsschritte manuell durchgeführt werden müssen.

Zur Herstellung von Rohren aus einer Metalltafel bzw. einem Metallblech ist es aus der EP0701878 B1 bekannt geworden, die Metalltafel in einer Haltevorrichtung mittels Spanngurten zu einem Rohr bzw. Ring zu biegen und die aneinander anliegenden freien Endkanten miteinander zu verschweißen. Das aus der EP0701878 B1 bekannte Verfahren ermöglicht die vollautomatische Herstellung von Rohren aus Metallblechen. Ein Verfahren der eingangs genannten Art ist aus der EP1632307 A2 bekannt geworden. Während die GB485242A ein einschlägiges Endlosband offenbart.

Bis jetzt ist es jedoch nicht möglich gewesen, ein aus zwei oder mehr Metalltafeln bestehendes Endlosband mit der bekannten Lösung herzustellen, da das bekannte Verfahren sich nur zur Bearbeitung eines einzelnen Metallblechs eignet. Es ist daher eine Aufgabe der Erfindung, einen Weg zu finden, den oben genannten Nachteil des Stands der Technik zu überwinden.

Diese Aufgabe wird mit einem Verfahren der eingangs genannten Art erfindungsgemäß dadurch gelöst, dass die zumindest zwei Metallbleche mit je einer Kante voran in eine von zwei einander gegenüberliegende Aufnahmen zumindest eines wieder entfernbaren Verbindungselementes eingeführt werden und einen Plattenverbund bilden, woraufhin freie Endkanten des Plattenverbundes, die den in dem zumindest einen Verbindungselement angeordneten Kanten der Metallbleche gegenüberliegen, zueinander gebogen und miteinander verschweißt werden, worauf das zumindest eine Verbindungselement entfernt und zuvor durch das zumindest eine Verbindungselement miteinander verbundenen Kanten der Metallbleche zueinander gebogen und miteinander verschweißt werden.

Die erfindungsgemäße Lösung ermöglicht es, durch die Verwendung eines Verbindungselementes zwei Metallbleche zu einem Platenverbund zu verbinden, welcher dann wie ein einziges Metallblech automatisiert bearbeitet werden kann. Es ist somit ein Verdienst der Erfindung, auf einfache Weise die automatisierte Herstellung eines Endlosbandes aus mehreren Metallblechen zu ermöglichen.

Gemäß einer vorteilhaften Weiterbildung der Erfindung kann es vorgesehen sein, dass die miteinander zu dem Plattenverbund verbundenen Metallbleche in einer Haltevorrichtung mittels Spanngurten in eine ringförmige Form gebracht werden, wobei die freien Endkanten des Plattenverbundes in eine Spannvorrichtung eingespannt und aufeinander zubewegt werden, bis ein Spalt zwischen den freien Endkanten geschlossen ist, worauf die freien Endkanten mittels einer Schweißvorrichtung miteinander verschweißt werden. Hierbei werden die Metallbleche vorteilhafter Weise vor einem Einlegen in die Haltevorrichtung mittels des zumindest einen Verbindungselementes miteinander verbunden.

Besonders gut eignet sich die Erfindung zur Herstellung eines dreiteiligen Endlosbandes. Gemäß einer entsprechenden Variante der Erfindung ist es vorgesehen, dass drei Metallbleche zur Herstellung des Bandes verwendet werden, wobei jeweils zwei benachbarte Metallbleche mit je zumindest einem Verbindungselement miteinander verbunden werden, um einen Plattenverbund aus den drei Metallblechen zu bilden, dessen stirnseitige, freie Endkanten hierauf zueinander gebogen und miteinander verschweißt werden, worauf zumindest ein erstes zwischen einem mittleren Metallblech und einem ersten äußeren Metallblech angeordnetes Verbindungselement entfernt wird und die zuvor über das zumindest eine erste Verbindungselement miteinander verbundenen Kanten des mittleren Metallbleches und des ersten äußeren Metallblechs zueinander gebogen und miteinander verschweißt werden, worauf zumindest ein zweites zwischen dem mittleren Metallblech und einem zweiten äußeren Metallblech angeordnetes Verbindungselement entfernt wird und zuvor über das zumindest eine zweite Verbindungselement miteinander verbundenen Kanten des mittleren und des zweiten äußeren Metallblechs zueinander gebogen und miteinander verschweißt werden.

Besonders vorteilhaft für typische Kleinbandanwendungen ist es, wenn das hergestellte Endlosband drei miteinander verbundene, aus Metallblechen gefertigte und in Bandlängsrichtung hintereinander angeordnete Abschnitte aufweist, wobei zwei unmittelbar benachbarte Abschnitte jeweils an aneinander angrenzenden Kanten der Abschnitte miteinander verschweißt sind. Durch die spezielle Ausbildung des erfindungsgemäßen Endlosbandes lassen sich auf einfache Weise aus handelsüblich vorkonfektionierten Metallplatten Kleinbänder für unterschiedliche Anwendungen realisieren.

Eine Ausführungsform der Erfindung, welche sich beispielsweise besonders für den Einsatz als Radantriebsband oder zur Verwendung in einer Vorrichtung zur Herstellung von kaschierter Wellpappe eignet, sieht vor, dass das Endlosband eine Umfangslänge zwischen 0,2 m und 10 m, insbesondere zwischen 1 m und 3 m, eine Dicke zwischen 0,1 mm und 1 mm, insbesondere zwischen 0,2 mm und 0,8 mm und eine Breite zwischen 0,2 m und 4 m, insbesondere zwischen 2 m und 3 m aufweist.

Besonders gute Eigenschaften hinsichtlich Verschleiß und Haltbarkeit lassen sich dadurch erzielen, dass das Endlosband aus einem Stahl gefertigt ist, der 0,09 % C, 15,0% Cr, 7,0% Ni, 0,7% Cu und 0,4% Ti aufweist. Die restlichen Anteile des Stahls gemäß dieser Variante der Erfindung werden durch Fe gebildet.

Als besonders vorteilhaft hat es sich für viele Anwendungen herausgestellt, wenn das Band eine Zugfestigkeit von 1200 bis 1600 N/mm² aufweist.

Gemäß einer bevorzugten Ausführungsform kann das Band einen Elastizitätsmodul von 190000 bis 210000 N/mm² aufweisen.

Besonders gut geeignet ist das erfindungsgemäße Endlosband für die Verwendung in einer Vorrichtung, welche zumindest zwei Rollen aufweist, zwischen welchen das Endlosband umläuft. Bei einer derartigen Vorrichtung kann es sich beispielsweise um eine Vorrichtung zur Herstellung von zumindest einseitig kaschierter Wellpappe handeln oder aber auch um einen Prüfstand für Automobile.

Die Erfindung samt weiteren Vorteilen wird anhand einiger nicht einschränkender Ausführungsbeispiele erläutert, welche in den Zeichnungen dargestellt sind. In diesen zeigen jeweils in schematisch stark vereinfachter Darstellung:
- Fig. 1: ein aus drei miteinander verschweißten Metallblechen gebildetes Endlosband;
- Fig. 2: einen Plattenverbund aus drei Metallblechen;
- Fig. 3: einen Schnitt entlang der Linie III-III in Fig. 2;
- Fig. 4: eine Vorrichtung zur Herstellung des Endlosbandes aus Fig. 1 in einem ersten Betriebszustand;
- Fig. 5: die Vorrichtung aus Fig. 4 in einem zweiten Betriebszustand;
- Fig. 6: eine Vorrichtung, bei welcher ein Endlosband gemäß Fig. 1 zum Einsatz kommt.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

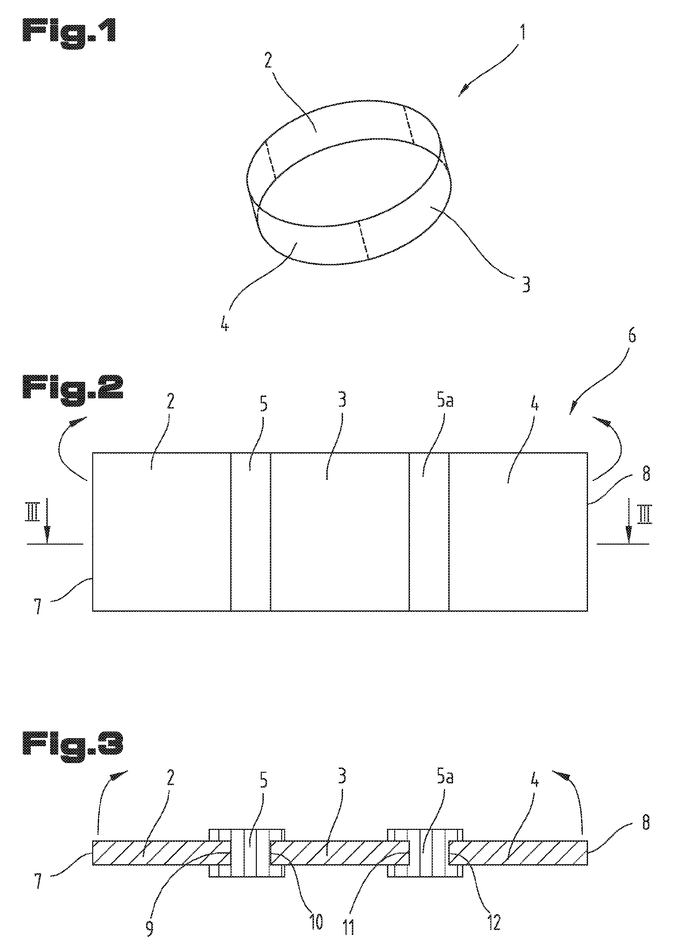

Gemäß Fig. 1 kann ein erfindungsgemäßes Endlosband 1 aus drei miteinander verbundenen Metallblechen 2, 3, 4 gefertigt sein. In Bandlängsrichtung werden durch die Metallbleche 2, 3, 4 hintereinander angeordnete Abschnitte I, II, III gebildet. Zwei unmittelbar benachbarte Abschnitte I, II, III sind jeweils an einander angrenzenden Kanten der Abschnitte I, II, III miteinander verschweißt. Die Schweißnaht kann hierbei quer oder schräg zur Bandlängsrichtung verlaufen. Bevorzugter Weise handelt es sich bei dem Endlosband 1 um ein sogenanntes Kleinband. So kann das Endlosband 1 eine Umfangslänge zwischen 0,2 m und 10 m, insbesondere zwischen 1 m und 3 m, eine Dicke zwischen 0,1 mm und 1 mm, insbesondere zwischen 0,2 mm und 0,8 mm und eine Breite zwischen 0,2 m und 4m, insbesondere zwischen 2 m und 3 m aufweisen.

Darüber hinaus kann das Endlosband 1 gemäß einer bevorzugten Ausführungsform der Erfindung aus einem Stahl gefertigt sein, der 0,09 % C, 15,0% Cr, 7,0% Ni, 0,7% Cu und 0,4% Ti aufweist, wobei die restlichen Anteile des Stahls bevorzugt durch Fe gebildet werden. Weiters kann das Endlosband 1 eine Zugfestigkeit von 1200 bis 1600 N/mm² und einen Elastizitätsmodul von 190000 bis 210000 N/mm² aufweisen.

Zur Herstellung des in Fig. 1 dargestellten Endlosbandes 1 können, wie in Fig. 2 dargestellt, in einem ersten Schritt jeweils zwei benachbarte Metallbleche 2, 3, 4 mit je einem Verbindungselement 5, 5a miteinander verbunden werden, um einen Plattenverbund 6 aus den drei Metallblechen 2, 3, 4 zu bilden.

Hierzu können gemäß Fig. 3 zwei Metallbleche 2, 3, 4 mit je einer Kante 9, 10, 11, 12 voran in eine von zwei einander gegenüberliegende Aufnahmen des jeweiligen Verbindungselementes 5, 5a eingeführt werden. Die Verbindungselemente 5, 5a können, wie in Fig. 3 beispielhaft dargestellt einen H-förmigen Querschnitt aufweisen. Alternativ wäre es aber auch möglich, dass die Verbindungselemente 5, 5a als Endbereiche der Metallbleche 2, 3, 4 übergreifende Hülsen ohne innere, die Kanten 9, 10, 11, 12 trennende Trennwand ausgeführt sind. Auch müssen die Verbindungselemente 5, 5a nicht wie dargestellt über die gesamte Breite der Metallplatten verlaufen. So wäre e auch möglich, dass die Länge der Verbindungselemente 5, 5a kürzer als die Länge der Kanten 9, 10, 11, 12 sind. Ist letzteres der Fall können anstelle von einem Verbindungselement 5, 5a zwischen zwei Metallplatten 2, 3, 4 auch mehrere entlang der Kanten 9, 10, 11, 12 angeordnete Verbindungselemente 5, 5a angeordnet werden. Auch können die Verbindungselemente 5, 5a mit Fixierungsmechanismen, wie beispielsweise Schrauben, oder Klemmen versehen sein, um ein Verrutschen zu verhindern.

Nach Bildung des Plattenverbundes 6 werden freie Endkanten 7, 8 des Plattenverbundes 6, die den in dem zumindest einen Verbindungselement 5, 5a angeordneten Kanten 9, 10, 11, 12 der Metallbleche 2, 3, 4 gegenüberliegen, zueinander gebogen und miteinander verschweißt. Zum Verschweißen können unterschiedliche Schweißverfahren zum Einsatz kommen, beispielsweise Laser-Schweißen, WIG-Schweißen, Plasma-Schweißen, MIG-MAG Schweißen etc.

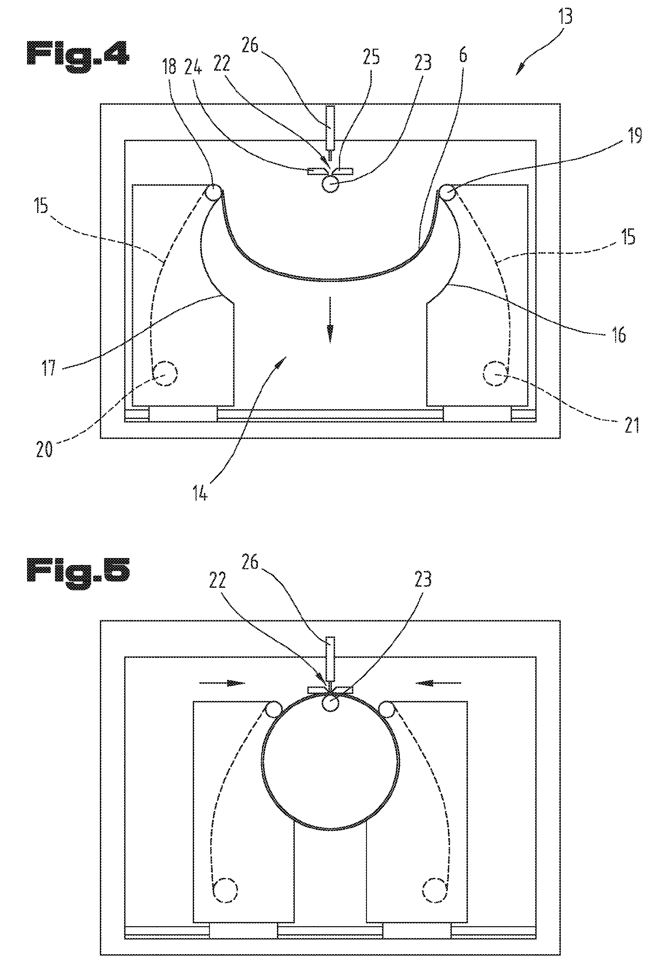

Das Biegen des Plattenverbundes 6 und das Verschweißen der freien Endkanten 7, 8 miteinander erfolgt bevorzugt mit einer Vorrichtung 13, wie sie in Fig. 4 und 5 dargestellt ist. Die Vorrichtung 13 kann, gemäß einer Variante der Erfindung, so wie es in der eingangs erwähnten EP 0 701 878 A1 beschrieben ist, ausgebildet sein und eine Haltevorrichtung 14 mit Spanngurten 15 aufweisen. Die Spanngurte 15 sind in Fig. 4 und 5 in Blickrichtung hintereinander angeordnet, sodass nur der erste der Spanngurte 15 in der Darstellung erkennbar ist. Die Haltevorrichtung 14 kann verstellbare Seitenwangen 16 und 17 aufweisen, deren Abstand zueinander verändert werden kann. Die Seitenwangen 16 und 17 dienen als Halterung für die Spanngurte 15. Die Spanngurte 15 können über an den Seitenwangen 16 und 17 angeordnete Umlenkungen 18, 19 geführt sein. Die freien Enden der Spanngurte 15 können auf Haspeln 20, 21 aufgewickelt sein, die mit gesteuerten Antrieben zur Einstellung der Länge und der seitlichen Positionierung der Spanngurte 15 verbunden sein können. Die Haltevorrichtung 14, die auf einem aus der Vorrichtung 13 herausfahrbaren Werkzeugwagen angeordnet sein kann, kann sich zur Bestückung mit dem Plattenverbund 6 außerhalb der Vorrichtung 13 befinden. Zur Bestückung der Haltevorrichtung 13 wird der Plattenverbund 6 auf die Spanngurte 5 aufgelegt, wobei die Seitenwangen 16 und 17 auseinandergefahren sind. Die Spanngurte 15 können bis zu einer für den jeweiligen Banddurchmesser festgelegten Position gespannt werden. Durch Zusammenfahren der Seitenwangen 16 und 17 wird der Plattenverbund 6 in eine ringfömige Form gebracht, wobei die freien Enden des Plattenverbundes 6 in einer Spannvorrichtung 22 eingespannt werden können. Die Spannvorrichtung 22 kann eine Auflage 23, beispielsweise in Form eines Stabes oder Rohres, sowie zwei getrennt betätigbare Spannbacken 24, 25 aufweisen. Sobald der Plattenverbund 6 in eine ringförmige Form gebracht ist und die Endkanten 7, 8 in der Spannvorrichtung 22 eingespannt sind, kann durch einseitiges Erhöhen der Zugkraft an den Spanngurten 15 ein Spalt zwischen den freien Endkanten 7, 8 geschlossen werden. Nach einem Zusammenschieben der Endkanten 7, 8 kann die Spannkraft der Spannvorrichtung 22 erhöht und die Lage der Endkanten 7, 8 festgelegt werden, sodass keine Verschiebung der Endkanten 7, 8 mehr möglich ist. Hierauf kann der Plattenverbund 6 in der Vorrichtung 13 mittels einer Schweißvorrichtung 26 entlang der zueinander gebogenen Endkanten 7, 8 verschweißt werden.

Nach Verschweißen der Endkanten 7, 8 kann die Haltevorrichtung 14 aus der Vorrichtung 13 herausgefahren und der nun ringförmige Plattenverbund 6 entnommen werden. Hierauf wird das Verbindungselement 5 entfernt und der Plattenverbund 6 wieder in die Haltevorrichtung 14 gelegt und die zuvor über das Verbindungselement 5 miteinander verbundenen Kanten 9, 10 werden auf die oben beschriebene Art wie zuvor die Endkanten 7, 8 zueinander gebogen und miteinander verschweißt. Nach Verschweißen der Kanten 9, 10 kann sich der gesamte Vorgang des Ent- und Bestückens der Haltevorrichtung 14 wiederholen, wobei nun das Verbindungselement 5a entfernt wird und schließlich die zuvor über das zweite Verbindungselement 5a miteinander verbundenen Kanten 11, 12 auf die oben beschrieben Art zueinander gebogen und miteinander zu dem Endlosband 1 verschweißt werden.

An dieser Stelle sei auch erwähnt, dass dem Herstellen des Endlosbandes 1 aus dem Plattenverbund 6 mittels der Vorrichtung 13 weitere Bearbeitungsschritte, wie Richten, Bearbeiten der Ränder der Metallbleche 2, 3, 4, Schleifen vorausgehen bzw. nachfolgen können.

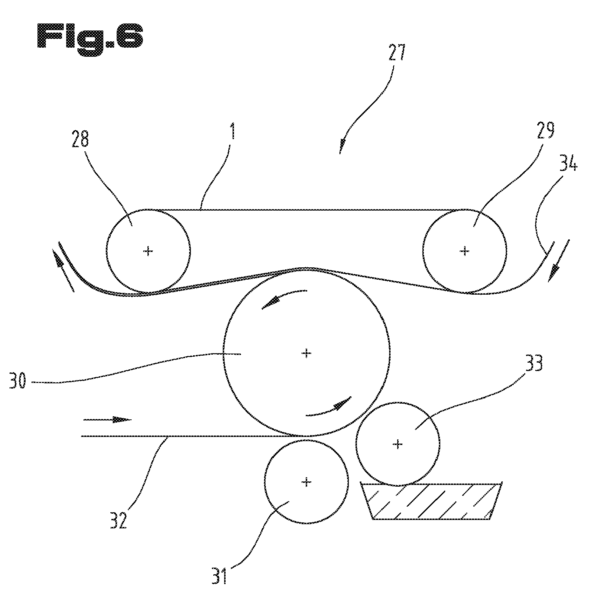

In Fig. 6 ist beispielhaft eine Vorrichtung 27 zum Kaschieren von Wellpappe dargestellt. Die Vorrichtung 27 weist ein Endlosband 1, wie es in Fig. 1 dargestellt ist, auf. Das Endlosband 1 läuft über zwei Rollen bzw. Trommeln 28, 29. Eine der Rollen 28, 29 kann beispielsweise als Spannrolle und die andere als Umlenkrolle vorgesehen sein. Weiters kann die Vorrichtung 27 eine obere Riffelwalze 30 und eine untere Riffelwalze 31 aufweisen, die miteinander kämmen. Auf eine erste Papierbahn 32 kann mittels einer Leimauftragwalze 33 ein Kleberauftrag erfolgen, wobei eine zweite Papierbahn 34 auf die aufgetragene Kleberschicht durch das Endlosband 1 aufgepresst wird, welches hier als Anpressband verwendet wird.

Das Endlosband 1 kann aber auch Verwendung in hier nicht dargestellten Vorrichtungen, wie beispielsweise in Antriebsvorrichtungen für Automobilprüfstände Verwendung finden.

Die Ausführungsbeispiele zeigen mögliche Ausführungsvarianten des erfindungsgemäßen Verfahrens.

Sämtliche denkbaren Ausführungsvarianten, die unter den Wortsinn des unabhängigen Anspruchs fallen, sind vom Schutzbereich umfasst.

### Bezugszeichenaufstellung

- 1: Endlosband
- 2: Metallblech
- 3: Metallblech
- 4: Metallblech
- 5a: Verbindungselement

- 5: Verbindungselement
- 6: Plattenverbund
- 7: Endkante
- 8: Endkante
- 9: Kante

- 10: Kante
- 11: Kante
- 12: Kante
- 13: Vorrichtung
- 14: Haltevorrichtung

- 15: Spanngurt
- 16: Seitenwange
- 17: Seitenwange
- 18: Umlenkung
- 19: Umlenkung

- 20: Haspel
- 21: Haspel
- 22: Spannvorrichtung
- 23: Auflage
- 24: Spannbacken

- 25: Spannbacken
- 26: Schweißvorrichtung
- 27: Vorrichtung
- 28: Rolle
- 29: Rolle

- 30: Riffelrolle
- 31: Riffelrolle
- 32: Papierbahn
- 33: Leimauftragwalze
- 34: Papierbahn

## Patentansprüche

1. Verfahren zur Herstellung eines Endlosbandes (1) aus zumindest zwei plattenförmigen Metallblechen (2, 3,4), **dadurch gekennzeichnet, dass** die zumindest zwei Metallbleche (2, 3, 4) mit je einer Kante (9, 10, 11, 12) voran in eine von zwei einander gegenüberliegende Aufnahmen zumindest eines wieder entfernbaren Verbindungselementes (5, 5a) eingeführt werden und einen Plattenverbund (6) bilden, woraufhin freie Endkanten (7, 8) des Plattenverbundes (6), die den in dem zumindest einen Verbindungselement (5) angeordneten Kanten (9, 10, 11, 12) der Metallbleche gegenüberliegen, zueinander gebogen und miteinander verschweißt werden, worauf das zumindest eine Verbindungselement (5, 5a) entfernt und die zuvor durch das zumindest eine Verbindungselement (5) miteinander verbundenen Kanten (9, 10, 11, 12) der Metallbleche (2, 3, 4) zueinander gebogen und miteinander verschweißt werden.

2. Verfahren nach Anspruch 1, **dadurch gekennzeichnet, dass** die miteinander zu dem Plattenverbund (6) verbundenen Metallbleche (2, 3,4) in einer Haltevorrichtung (14) mittels Spanngurten (15) in eine ringförmige Form gebracht werden, wobei die freien Endkanten (7, 8) des Plattenverbundes (6) in eine Spannvorrichtung (22) eingespannt und aufeinander zubewegt werden, bis ein Spalt zwischen den freien Endkanten (7, 8) geschlossen ist, worauf die freien Endkanten (7, 8) mittels einer Schweißvorrichtung (26) miteinander verschweißt werden.

3. Verfahren nach Anspruch 2, **dadurch gekennzeichnet, dass** die Metallbleche (2, 3, 4) vor einem Einlegen in die Haltevorrichtung (14) mittels des zumindest einen Verbindungselementes (5, 5a) miteinander verbunden werden.

4. Verfahren nach einem der Ansprüche 1 bis 3, **dadurch gekennzeichnet, dass** drei Metallbleche (2, 3, 4) zur Herstellung des Bandes (1) verwendet werden, wobei jeweils zwei benachbarte Metallbleche (2, 3, 4) mit je zumindest einem Verbindungselement (5, 5a) miteinander verbunden werden, um einen Plattenverbund (6) aus den drei Metallblechen (2, 3,4) zu bilden, dessen stirnseitige, freie Endkanten (7, 8) hierauf zueinander gebogen und miteinander verschweißt werden, worauf zumindest ein erstes zwischen einem mittleren Metallblech (3) und einem ersten äußeren Metallblech (2) angeordnetes Verbindungselement (5) entfernt wird und die zuvor über das zumindest eine erste Verbindungselement (5) miteinander verbundenen Kanten (9, 10) des mittleren Metallbleches (3) und des ersten äußeren Metallblechs (2) zueinander gebogen und miteinander verschweißt werden, worauf zumindest ein zweites zwischen dem mittleren Metallblech (3) und einem zweiten äußeren Metallblech (4) angeordnetes Verbindungselement (5a) entfernt wird und zuvor über das zumindest eine zweite Verbindungselement (55a) miteinander verbundenen Kanten (11, 12) des mittleren und des zweiten äußeren Metallblechs zueinander gebogen und miteinander verschweißt werden.

## Claims

1. A method for producing an endless belt (1) from at least two flat metal sheets (2, 3, 4), **characterised in that** the at least two metal sheets (2, 3, 4) are introduced into one of two opposing fixtures of at least one removable connection element (5, 5a), one edge (9, 10, 11, 12) of each leading, and form a composite plate (6), whereupon free end edges (7, 8) of the composite plate (6) which lie opposite the edges (9, 10, 11, 12) of the metal sheets arranged in the at least one connection element (5) are bent towards one another and welded together, whereupon the at least one connection element (5, 5a) is removed and the edges (9, 10, 11, 12) of the metal sheets (2, 3, 4) connected to one another beforehand by the at least one connection element (5) are bent towards one another and welded together.

2. The method according to claim 1, **characterised in that** the metal sheets (2, 3, 4) connected to one another to form the composite plate (6) are formed into an annular shape in a holding device (14) by means of tensioning belts (15), wherein the free end edges (7, 8) of the composite plate (6) are clamped in a clamping device (22) and moved towards one another until a gap between the free end edges (7, 8) is closed, whereupon the free end edges (7, 8) are welded together by means of a welding device (26).

3. The method according to claim 2, **characterised in that** the metal sheets (2, 3, 4) are connected to one another by means of the at least one connection element (5, 5a) before being placed into the holding device (14).

4. The method according to one of claims 1 to 3, **characterised in that** three metal sheets (2, 3, 4) are used to produce the belt (1), wherein two respectively adjacent metal sheets (2, 3, 4) are connected to one another, each by at least one connection element (5, 5a), to form a composite plate (6) from the three metal sheets (2, 3, 4), the terminal, free end edges (7, 8) of which are then bent towards one another and welded together, whereupon at least a first connection element (5) disposed between a middle metal sheet (3) and a first outer metal sheet (2) is removed and the edges (9, 10) of the middle metal sheet (3) and the first outer metal sheet (2) connected to one another beforehand by the at least one first connection element (5) are bent towards one another and welded together, whereupon at least a second connection element (5a) disposed between the middle metal sheet (3) and a second outer metal sheet (4) is removed and edges (11, 12) of the middle and the second outer metal sheets connected to one another beforehand by the at least one second connection element (5a) are bent towards one another and welded together.

## Revendications

1. Procédé de fabrication d'une bande sans fin (1) à partir d'au moins deux tôles métalliques en forme de plaque (2, 3, 4), **caractérisé en ce que** les au moins deux tôles métalliques (2, 3, 4), avec chacune un bord (9, 10, 11, 12) en avant, sont insérées dans l'une de deux parties de réception opposées d'au moins un élément de liaison (5, 5a) amovible, et forment un composite de plaques (6), après quoi des bords d'extrémité libres (7, 8) du composite de plaques (6), qui sont opposés aux bords (9, 10, 11, 12) des tôles métalliques qui se trouvent dans le au moins un élément de liaison (5), sont ensuite recourbés l'un vers l'autre et soudés ensemble, le au moins un élément de liaison (5, 5a) étant alors retiré et les bords (9, 10, 11, 12) des tôles métalliques (2, 3, 4) préalablement reliés ensemble par le au moins un élément de liaison (5), étant alors recourbés les uns vers les autres et soudés ensemble.

2. Procédé selon la revendication 1, **caractérisé en ce que** les tôles métalliques (2, 3, 4) reliées mutuellement au composite de plaques (6) sont amenées dans un dispositif de retenue (14) au moyen de sangles de serrage (15) en une forme annulaire, de sorte que les bords d'extrémité libres (7, 8) du composite de plaques (6) sont serrés dans un dispositif de serrage (22), et sont déplacés l'un vers l'autre jusqu'à ce qu'un espace entre les bords d'extrémité libres (7, 8) soit fermé, après quoi les bords d'extrémité libres (7, 8) sont soudés ensemble au moyen d'un dispositif de soudage (26).

3. Procédé selon la revendication 2, **caractérisé en ce que** les tôles métalliques (2, 3, 4) sont reliées ensemble avant un chargement dans le dispositif de retenue (14) au moyen du au moins un élément de liaison (5, 5a).

4. Procédé selon l'une quelconque des revendications 1 à 3, **caractérisé en ce que** trois tôles métalliques (2, 3, 4) sont utilisées pour la fabrication de la bande (1), dans lequel deux tôles métalliques adjacentes (2, 3, 4) respectives comportant chacune au moins un élément de liaison (5, 5a) sont reliées ensemble pour former un composites de plaques (6) constitué des trois tôles métalliques (2, 3, 4) dont les bords d'extrémité libres frontaux (7, 8) sont ici recourbés et soudés ensemble, après quoi au moins un premier élément de liaison (5) disposé entre une tôle métallique centrale (3) et une première tôle métallique extérieure (2) est retiré, et les bords (9, 10) reliés ensemble préalablement par l'intermédiaire d'au moins un premier élément de liaison (5) de la tôle métallique centrale (3) et de la première tôle métallique extérieure (2) sont recourbés l'un vers l'autre et soudés ensemble, après quoi au moins un second élément de liaison (5a) disposé entre la tôle métallique centrale (3) et une seconde tôle métallique extérieure (4) est retiré, et les bords (11, 12) reliés ensemble préalablement par l'intermédiaire d'au moins un second élément de liaison (5a) de la tôle métallique centrale (3) et de la seconde tôle métallique extérieure sont recourbés l'un vers l'autre et soudés ensemble.
